# EUROPEAN PATENT APPLICATION

(11) **EP 1 245 887 A1**
(43) Date of publication of application: **02.10.2002**
(21) Application number: 02380033.7
(22) Date of filing: 12.02.2002
(51) Int. Cl.: F16L 13/14

(54) **Device for joining pipes and accessories**

(30) Priority: 28.03.2001 ES 200100726
(71) Applicant: Lorenzo Escusol, Jesus, 50100 La Almunia de Dona Godina, Zaragoza (ES)
(72) Inventor: Lorenzo Escusol, Jesus, 50100 La Almunia de Dona Godina, Zaragoza (ES)
(74) Representative: Ungria Lopez, Javier

(57) **Abstract**

Device for joining pipes and accessories, being of utility for joining all manner of pipes and accessories, independently of the manufacturing material and of their diameter, in such a way that the device includes a tubular body (4), according to two sections (6) and (7) of different diameters provided with some sealing O-rings, section (7) of smaller diameter being fitted into one end of a pipe (2) to connect, able to be of a different material from that of piece (1), that pipe end being coupled to the corresponding connecting arm (3) of the accessory piece (1), the connecting arm (3) of which presents an internal diameter similar to that of the larger diameter section (6) of the tubular body (4), the fastening being consolidated by means of pressure on the connecting arm (3).

## Description

### OBJECT OF THE INVENTION

As stated in the title of this descriptive report, the following Utility Model concerns a device for joining pipes and accessories, by means of which pipes and accessories of different manufacturing materials and different diameters can be joined, thus permitting a considerable economic saving.

The device that is presented is of utility for connecting pipes and accessories by pressure, having great versatility and permitting a perfect seal to be obtained.

Moreover, the device for joining pipes and accessories that is presented is of utility for being used both in the installation of new networks and in the replacement and/or repair of old installations due to the fact that it can be adapted to pipes of different materials and diameters.

Indeed, the device for joining pipes and accessories forming the object of this description presents a major advantage in its use, permitting a reduction in the economic cost due to requiring a smaller number of parts in stock and, moreover, having a lower manufacturing cost, all of which leads to a drastic reduction in costs.

### FIELD OF APPLICATION

The device for joining pipes and accessories is of special application for pressure connections in pipelines for water and other fluids, being of utility in the installation of pipelines for drinking water and heating, as well as for sanitary, plumbing, cooling and compressed air installations and for industrial applications.

### BACKGROUND OF THE INVENTION

Up to a few years ago, the pipes used in pipelines for water and other fluids were made of steel or copper, but technological progress has led to the introduction of pipes made of other materials.

So, the pipes currently used for heating, plumbing and climatisation installations are made of PEX (cross-linked polyethylene), copper, steel, stainless steel or multilayer (polyethylene + aluminium + polyethylene), in such a way that the problem that is presented is that there is no standard for unifying and regulating the diameters and thicknesses of them, with the result that each manufacturer produces pipes according to its own criteria.

In this way, the most usual diameters in PEX pipes, according to their external diameter, are: 16mm, 20mm, 25mm, 32mm, 40mm, 50mm, 63mm, etc., while the most usual diameters in pipes made of copper and stainless steel are: 12mm, 14mm, 15mm, 16mm, 18mm, 22mm, 28mm, 35mm, 42mm, 54mm, etc., with the external diameter having to be considered in these pipes too.

Moreover, in the multilayer type of pipes, which are the latest to appear on the market, their internal diameter and their external diameter have to be considered, in other words, their thickness has to be taken into account, in such a way that the pipes of this type that are most used are, according to their external diameter and thickness, the following: 14mmx2mm, 16mmx2mm, 18mmx2mm, 20mmx2mm, 2 0mmx2.25mm, 20mmx2.5mm, 25mmx2.5mm, 26mmx3mm, 32mmx3mm, 40mmx3mm, etc., varying depending on the local manufacturers.

So, the connection and work pieces (T-pieces, bends, curves, sleeves, collars, mixed connections, thread mixed adapters, terminal units, etc.), for the same type of material, of course, are combined among the different diameters.

Faced with this situation, a major problem arises, given the wide variety of pipes with different measures, without the possibility of being able to combine them with the usual means existing on the market.

Moreover, in PEX and multilayer pipes, when making joints by means of pressure (press-fitting), their characteristics mean that they have to be strengthened on the inside in order to be able to obtain a perfect airtight joint, while for copper or stainless steel pipes their rigidity means that they do not require strengthening.

So, all connecting pieces for PEX and multilayer pipes have a stub incorporated that serves to provide internal strengthening for that pipe, in such a way that each model of pipe, for example, multilayer, needs a particular stub depending on the internal diameter of the pipe, in other words, the type of stub valid for a pipe of 20x2mm is not valid for pipes of 20x2.25mm, nor for pipes of 20x2.5mm.

In the case of copper or stainless steel pipes, no strengthening stub needs to be used in their connections, because of which any piece from any manufacturer can be used with any pipe, provided they have the same diameter.

Moreover, we can point out that the joining of pipes and accessories made of steel and copper can be done by threading for joints that can be dismantled, or by welding for fixed joints.

Furthermore, given that for each pipe manufacturer it is necessary to develop the required accessories for assembling the installation in a specific way depending on the diameter and thickness of the pipes, these accessories are only valid for the specific manufactured pipes for which they are intended and they are not valid for other pipes, a fact that represents a considerable drawback.

So, in practice, what happens is that each pipe manufacturer presents certain pipes with their own measurements, and the manufacturer has to make the accessories (bends of different angle, T-pieces, etc.) in accordance with them, in such a way that they are not interchangeable, which means that fitters have to keep a large number of pieces in stock, with the economic cost that this entails.

In this way, in order to be able to have accessories that can be adapted to pipes of different diameter, it would be necessary for the accessories to have connectors with all possible combinations with regard to the pipes, something that is not feasible given the large number of accessories that would be needed for covering all the possible variables.

By way of example, we can quote a type of connection by means of threading constituted by an accessory piece that presents a threaded connection, while on the other side there is a connection for a pipe for which there is what is known as a toothed lug fitted on the inside and provided with the corresponding O-rings, which acts as a stop for the pipe and which is clasped via its external part by means of a metal collar and a nut which presses on that collar and whose nut threads into the accessory piece.

In terms of an example of pressure connection, we can quote that model which presents an accessory piece which has the corresponding connectors that fit into the interior of the pipe and on which is provided the corresponding collar which is compressed, in such a way that as many models of accessory pieces with combined connectors would be needed as there are models of pipes that the manufacturer has.

### DESCRIPTION OF THE INVENTION

This report describes a device for joining pipes and accessories, being of utility for joining all manner of pipes and accessories, independently of the manufacturing material and of their diameter, in such a way that the device includes a tubular body, according to two sections of different diameters provided with some sealing O-rings, the section of smaller diameter being fitted into one end of a pipe to connect, able to be of a different material from that of the accessory piece that it is going to be fitted to, that pipe end being coupled to the corresponding connecting arm of the accessory piece, the connecting arm of which presents an internal diameter similar to that of the larger diameter section of the tubular body, the fastening being consolidated by means of pressure on the connecting arm of the accessory piece.

The use of intermediate tubular bodies of different diameters in their two sections permits the adaptation of all manner of pipes and accessories, independently of their manufacturing material, diameter and thickness, with the section of smaller diameter being adapted to the internal diameter of pipes of equal external diameter and different thickness, in other words, different internal diameter.

In this way, it will suffice to have a series of intermediate tubular bodies in order to be able to connect pipes and accessories of different material and of different diameters and thicknesses, thereby considering reducing the investment to be made, at the same time as having greater versatility by not being restricted to working with elements from a single manufacturer.

Moreover, the device for joining popes and accessories that is presented is adaptable both to new installations to be made and to old installations, which represents an important advantage.

In order to complement the description that is going to be made below, and with the aim of aiding a better understanding of the characteristics of the invention, this descriptive report is accompanied by a set of plans whose figures represent the most characteristic details of the invention in an illustrative manner only, and not to be regarded as restrictive.

### BRIEF DESCRIPTION OF THE DESIGNS

Figure 1. This shows a cross-section view of an accessory T-piece, of the end of a pipe to connect, and the corresponding intermediate body provided with the respective O-rings.

Figure 2. This shows a view of the assembly of the accessory piece and the pipe relating to the above figure, by means of the intermediate body, in order to materialise the connection by means of pressure on the corresponding connecting arm of the accessory T-piece.

### DESCRIPTION OF AN EMBODIMENT OF THE INVENTION

With reference to these figures and in accordance with the numbering system adopted, we can see how an accessory T-piece 1, of a conventional type, manufactured in copper for example, is suitable for being adapted to a pipe 2, of the multilayer type for example, of external diameter similar to the internal diameter of the corresponding connecting arm 3 of the accessory piece 1.

To achieve this, the corresponding intermediate adaptation body 4 will be coupled to one end of the multilayer type pipe 2, with the adaptation body 4 presenting a smaller diameter similar to the internal diameter of the pipe, and a larger diameter similar to the internal diameter of the connecting arm 3, permitting the connection to be made of a copper accessory piece with a multilayer type pipe.

So, the connecting arm 3 incorporates the corresponding O-ring 5, and the section 6 of the body 4 which is adapted and fits in its inside presents a larger diameter equal to the internal diameter of that arm.

Moreover, the accessory piece can be provided with the corresponding internal O-ring, as has been stated, or it can lack the O-ring. In this way, for copper and steel pipes the O-ring will be needed, but for PEX and multilayer pipes it will not be needed, which is going to represent an added economic saving.

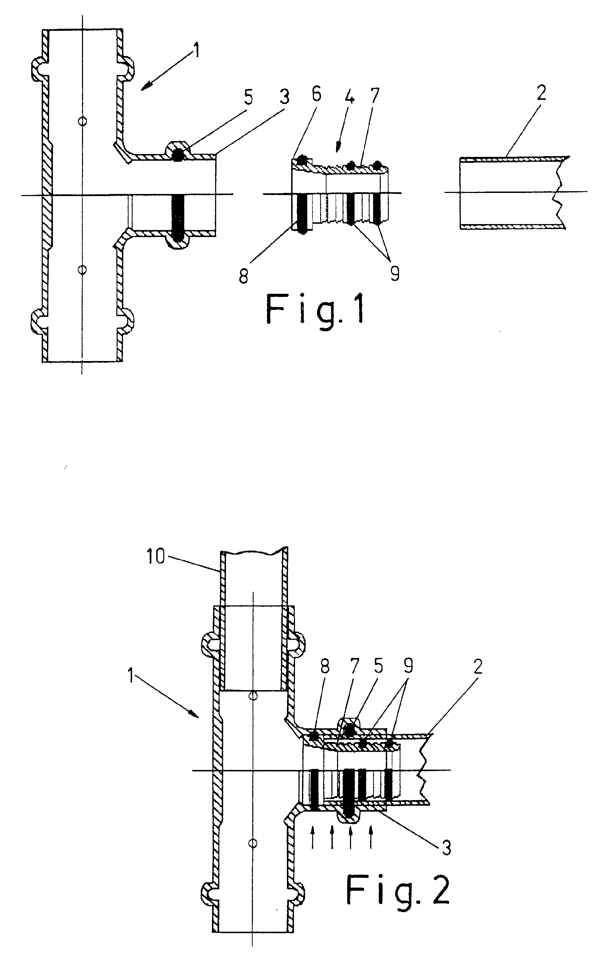

As can be seen in figure 2 of the designs, once the end of the pipe 2 is fitted into the connecting arm 3, the fixing will proceed to be consolidated by means of pressure on the external surface of the arm 3 of the accessory piece, given that this device is particularly suitable for being used in pressure connections.

In order to be able to have a better understanding of the great advantage provided by using a body 4 in the connection of pipes and accessories, which permits the joining of pipes and accessories independently of their material and diameter, let us consider, for example, that a manufacturer, from among his different products, manufactures a multilayer pipe of 20x2.25, in such a way that the connection accessories for it (bends according to different angles, T-pieces, etc.) will, in accordance what has just been stated, present an external diameter of 15.5.

If, of the other hand, another manufacturer produces a pipe of 20x2.5, then the accessories for this will present an external diameter of 15.

In this way, the accessories for one and another manufacturer are not interchangeable, and specific accessories have to be used in each case.

Starting with this drawback, by means of using tubular bodies 4, of low economic cost, both pipes, of different diameter, will easily be able to be adapted to a conventional accessory of internal diameter 20mm since it will suffice to have a type of body 4 of larger diameter 20 and smaller diameter 15.5, and a second type of body 4 of larger diameter 20 and smaller diameter 15, it being much more economical, of course, to have bodies 4 of different measurements than to have to have a wide variety of accessories (bends of different angles, T-pieces, etc.) adapted to those measurements. Naturally, the problem is made worse by the diversity of measurements that exist.

So, the accessory piece 1 can be a conventional copper piece and, as we have seen, connected to it can be pipes of other materials and different internal diameters, such as multilayer type pipes, by means of using bodies 4 of different measurements.

By means of the proposed idea, copper and stainless steel pipes will be joined by means of using the pieces that are currently being manufactured, taking into account solely the external diameter of the pipe, without having to worry at all about the internal diameter, while we will use the intermediate body 4 when dealing with joining pipes, for example the multilayer type, with different internal diameters.

So, in a T-type join with an internal diameter of 20mm, we will be able to join each of its three connectors to pipes of different internal diameters in such a way that, in a side of the connection (the left hand side for example), we can fit a pipe of 20 mm of external diameter with a thickness of 2mm; in its opposite side (the right hand side in said example) we can join a pipe of 20mm of external diameter with a thickness of 2.25mm, while in its central section we can fit a pipe of 20mm of external diameter with a thickness of 2.5mm, something that is impossible and unthinkable to do with conventional means.

In order to carry out the joins described above, by way of an example it will sufficient to have three types of body 4, of low economic cost, presenting a diameter in the larger section 6 of 20mm, and a diameter in the smaller section 7 of 16mm, 15.5mm and 15mm, respectively.

Finally, by way of example, and in order to be able to clearly determine the economic advantages provided by joining pipes by means of the proposed device, it suffices to indicate that a T-piece of 20mm of the type conventionally used in the joining of multilayer pipes has an approximate cost of 700 ptas/unit, while the cost of a conventional copper T-piece of 22mm plus the three variants of intermediate body 4 would have an approximate cost of 150 ptas, in other words, we have a drastic economic saving.

Furthermore, we can see how in figure 2 of the designs a T-piece has been represented to which has been connected a multilayer type pipe 2 and a copper pipe 10, in other words, all combinations that are wished will be able to be made.

## Claims

1. DEVICE FOR JOINING PIPES AND ACCESSORIES, being of utility for joining all kind of pipes and accessories, independently of a manufacturing material and diameter, **characterised in that** said device comprises a tubular body (4), according to two sections (6) and (7) of different diameter provided with some sealing O-rings, the section (7) with smaller diameter being fitted into an end of a pipe (2) to be connected, able to have been made of a different material from that of piece (1), by means of coupling said pipe end to the corresponding connecting arm (3) of an accessory piece (1), whose connecting arm (3) presents an internal diameter similar to that of the section (6) of the tubular body (4) with larger diameter; fastening being consolidated by means of pressure on the connecting arm (3).

2. DEVICE FOR JOINING PIPES AND ACCESSORIES, according to claim 1, **characterised in that** using bodies (4) of different diameter in their two sections (6) and (7) allows an adaptation of all kind of pipes and accessories, independently of their manufacturing material, diameter and thickness, the section (7) of smaller diameter being adapted to internal diameter of pipes of equal external diameter and different thickness and therefore, different internal diameter.
